# EUROPÄISCHE PATENTANMELDUNG

(11) **EP 4 467 840 A1**
(43) Veröffentlichungstag der Anmeldung: **27.11.2024**
(21) Anmeldenummer: 24178049.3
(22) Anmeldetag: 24.05.2024
(51) Int. Cl.: F16F 15/31

(54) **MECHANISCHER ENERGIESPEICHER UND VERFAHREN ZUM SPEICHERN VON ENERGIE**

(30) Priorität: 24.05.2023 DE 102023113592
(71) Anmelder: Stenatec GmbH, 50859 Köln (DE)
(72) Erfinder: Rick Müller, Nadine, 50859 Köln (DE)
(74) Vertreter: Kluin Patent

(57) **Zusammenfassung**

Mechanischer Energiespeicher (100, 200, 300, 400, 500, 600, 700, 800, 900, 1000, 1100, 1200, 1300), insbesondere dynamisches Schwungrad, mit einem um eine im Wesentlichen horizontal angeordnete Hauptdrehachse (A1) rotierbar gelagerten, zum Speichern von Rotationsenergie dienenden Hauptrotationskörper (1) und mit mindestens einem an dem Hauptrotationskörper (1) angeordneten, einen Massenmittelpunkt (M21, M22, M23, M24, M25, M26) aufweisenden und unter einer Fliehkrafteinwirkung nach radial außen beschleunigenden Schwungmasseteil (21, 22, 23, 24, 25, 26).

Der Massenmittelpunkt (M21, M22, M23, M24, M25, M26) ist in Abhängigkeit der am Hauptrotationskörper (1) umlaufenden Position des Schwungmasseteils (21, 22, 23, 24, 25, 26) relativ zum Hauptrotationskörper (1) verlagerbar.

## Beschreibung

Die Erfindung betrifft einen mechanischen Energiespeicher, insbesondere ein dynamisches Schwungrad, mit einem um eine im Wesentlichen horizontal angeordnete Hauptdrehachse rotierbar gelagerten, zum Speichern von Rotationsenergie dienenden Hauptrotationskörper, an dem mindestens ein einen Massenmittelpunkt aufweisendes und unter einer Fliehkrafteinwirkung nach radial außen beschleunigendes Schwungmasseteil angeordnet ist. Ferner betrifft die Erfindung ein Verfahren zum Speichern von Energie mit einem solchen mechanischen Energiespeicher.

Mechanische Energiespeicher, insbesondere derartige Schwungräder, sind in zahlreichen Varianten hinlänglich bekannt. Einer der ältesten und bekanntesten mechanischen Energiespeicher ist der Fliehkraftregler von James Watt. Neben den ausschließlich von der Drehzahl der Schwungmasse abhängigen Energiespeichern nutzen modernere Hydro-Energiespeicher die Vorteile veränderbarer Schwungmassen. Hierbei werden oftmals Fluide aus oder in einen als Schwungmasse dienenden Speicher ein- oder ausgeleitet, so dass es über den Umfang des Schwungrads zu einer unterschiedlichen Masseverteilung kommen kann. Ein solches Schwungrad erfordert jedoch oftmals einen relativ komplexen Aufbau sowie kann im Betrieb aufgrund der stetig zu erbringenden Pumpenleistung relativ kostenintensiv sein.

Aufgabe der vorliegenden Erfindung ist es daher, einen mechanischen Energiespeicher bereitzustellen, welcher zumindest einen der oben genannten Nachteile verbessert und insbesondere einen besonders einfachen und wartungsarmen Aufbau bei ansonsten annähernd gleicher Wirkleistung ermöglicht.

Die Erfindung löst die gestellte Aufgabe durch einen mechanischen Energiespeicher mit den Merkmalen des Hauptanspruchs sowie durch ein Verfahren mit den Merkmalen des Anspruchs 14. Vorteilhafte Ausgestaltungen und Weiterbildungen der Erfindung sind in den Unteransprüchen, der Beschreibung sowie den Figuren offenbart.

Erfindungsgemäß ist vorliegend das Schwungmasseteil und/oder der Massenmittelpunkt eines jeden Schwungmasseteils in Abhängigkeit der am Hauptrotationskörper umlaufenden Position des Schwungmasseteils, insbesondere in Bezug auf die Schwerkraftrichtung, verlagerbar. Insbesondere ist es vorgesehen, dass der Massenmittelpunkt ausschließlich in Abhängigkeit der aktuellen umfangsseitigen Lage des Schwungmasseteils am Hauptrotationskörper in Bezug auf die Schwerkraftrichtung verlagerbar ist. Die Verlagerung des Schwungmasseteils kann beispielsweise mit Hilfe der Schwerkraft erfolgen, beispielsweise durch eine besondere Formgebung des Schwungmasseteils. Es ist vorgesehen, dass die Verlagerung insbesondere dann erfolgt, wenn das Schwungmasseteil den obersten und/oder untersten Punkt des Umfangs des Hauptrotationskörpers passiert. Dadurch kann neben der Fliehkraft ein zusätzliches Drehmoment an dem Hauptrotationskörper bewirkt werden, welches zum Erhalt der Drehbewegung bzw. kinetischen Rotationsenergie beitragen kann.

In einer besonders vorteilhaften Ausgestaltung der Verlagerung des Schwungmasseteils ist der Massenmittelpunkt eines ersten Schwungmasseteils radial zur Hauptdrehachse weiter entfernt liegend angeordnet als der Massenmittelpunkt eines zweiten Schwungmasseteils, insbesondere eines dem ersten Schwungmasseteils in Bezug auf die Hauptdrehachse im Wesentlichen gegenüberliegenden zweiten Schwungmasseteils. Dadurch kann auf den Hauptrotationskörper ein besonders großes Drehmoment wirken. Insbesondere wenn das erste Schwungmasseteil am Hauptrotationskörper in einem aufsteigenden Bereich angeordnet ist, also nach einem Passieren des untersten Umfangpunkts des Hauptrotationskörpers, und das zweite Schwungmasseteil am Hauptrotationskörper in einem abfallenden Bereich angeordnet ist, also nach einem Passieren des oberste Umfangpunkts des Hauptrotationskörpers, kann das in Umfangsrichtung im abfallenden Bereich auf den Hauptrotationskörper wirkende Drehmoment größer als das in Umfangsrichtung im aufsteigenden Bereich auf den Hauptrotationskörper wirkende Drehmoment sein. Durch dieses Ungleichgewicht, welches durch die Verlagerung dauerhaft beibehalten werden kann, ist es möglich, die Rotation des Hauptrotationskörpers zu beschleunigen oder zumindest für eine gewisse Zeit aufrecht zu halten. Insbesondere kann durch diese gerichtete und stets wiederkehrende Unwucht durch Ausnutzung des sich aufgrund der Schwerkraft ergebenden Drehmoments eine verlängerte Erhaltung der Drehbewegung bewirkt werden.

Zur Verlagerung des Massenmittelpunkts ist für eine besonders einfache und kostengünstige Ausgestaltung vorzugweise das Schwungmasseteil gegenüber dem Hauptkörper verlagerbar. Die Verlagerung des Massenmittelpunkts kann beispielsweise durch eine translatorische oder rotatorische Bewegung des Schwungmasseteils erfolgen. Die Verlagerung des Schwungmasseteils und/oder des Massenmittelpunkts kann hierbei durch die Schwerkraft erfolgen oder aktiv vorgenommen werden, beispielsweise durch einen Antrieb. In einer besonderen Weiterentwicklung ist der Massenmittelpunkt unabhängig von einer Verlagerung das Schwungmasseteils gegenüber der Hauptdrehachse verlagerbar, beispielsweise mithilfe eines separaten Antriebs, wie beispielsweise eines Magnetfeld, insbesondere eines hierdurch ausgelösten elektromagnetischen Impulses auf das Schwungmasseteil oder ein hierin befindliches Medium.

In einer bevorzugten Ausgestaltung der Erfindung ist das Schwungmasseteil als ein Hohlraum ausgebildet, in welchem ein verlagerbares Medium, welches die Hauptmasse bestimmt, angeordnet ist. Das verlagerbare Medium kann beispielsweise eine Flüssigkeit, Sand und/oder einen Festkörper umfassen. Dadurch kann der Massenmittelpunkt des Schwungmasseteils in besonders einfacher Weise verändert werden, insbesondere durch eine Verlagerung des in dem Schwungmasseteil befindlichen Mediums. Um die Verlagerung eines als Sand ausgebildeten Mediums aktiv beschleunigen zu können, kann der Sand mit magnetischen Partikeln versehen sein. Dadurch kann mittels elektromagnetischer Impulse der Sand aktiv und besonders schnelle von einem Bereich des Schwungmasseteils bzw. des Hohlraums in einen anderen Bereich des Schwungmasseteils bzw. des Hohlraums verlagert werden.

Bevorzugt ist das Massegewicht des Schwungmasseteils deutlich geringer als das Massegewicht der in das Schwungmasseteil eingefüllten Flüssigkeit. Unter einem verlagerbaren Medium kann insbesondere ein jedes Mittel verstanden werden, welches insbesondere durch eine Verschwenkung des das Mittel tragenden Körpers, vorliegend jeweilige das Schwungmasseteil, verlagert werden kann, das heißt insbesondere durch Rutschen, Fließen oder Rieseln in seiner Position verändert werden kann. Der besseren Übersicht halber wird nachfolgend für das verlagerbare Medium nur noch der Begriff "Flüssigkeit" verwendet, wobei stets ein jedes verlagerbares Medium hierunter zu verstehen ist.

Für eine besonders einfache Massenmittelpunktverlagerung ist das Schwungmasseteil bevorzugt verschwenkbar an dem Hauptrotationskörper gelagert. Dadurch kann der Massenmittelpunkt des Schwungmasseteils entweder aufgrund dessen Formgebung verlagert werden, oder eine in dem Schwungmasseteil befindliche Flüssigkeit kann hierzu im Wesentlichen beitragen.

Um eine aktive und punktgenaue Verlagerung der Schwungmasseteile zu realisieren, kann es vorgesehen sein, dass mindestens zwei Schwungmasseteile mechanisch über ein Gestänge und/oder Getriebe miteinander verbunden sind. Dadurch kann vorteilhafterweise eine Verschwenkung der Schwungmasseteile gegeneinander steuerbar sein. Insbesondere kann ein sich mit Hilfe der Schwerkraft schwenkende Schwungmasseteil dazu genutzt werden, ein anderes, insbesondere gegenüberliegendes Schwungmasseteil ebenfalls mit zu verschwenken.

Besonders bevorzugt ist das Schwungmasseteil als ein mit Flüssigkeit befüllbarer Hohlkörper ausgebildet, wobei vorzugsweise jedes Schwungmasseteil eine im Wesentlichen gleiche Menge an Flüssigkeit aufweist. Dadurch kann jeder einzelne Schwungmasseteil im gleichen Umfang zum Erzeugen eines auf den Hauptrotationskörper wirkenden Drehmoments in gleicher Weise beitragen, so dass die Rotationsbewegung des Hauptrotationskörper homogen und gleichmäßig erhalten werden kann.

Besonders bevorzugt weist das Schwungmasseteil, insbesondere jedes Schwungmasseteil, eine dauerhaft unveränderte Menge an Flüssigkeit auf. Das bedeutet, dass keine Flüssigkeit das Schwungmasseteil verlässt oder zusätzliche Flüssigkeit hinzukommt. Dadurch kann der Hohlraum des Schwungmasseteils, in welchem sich die Flüssigkeit befindet, vollständig und dauerhaft verschlossen sein, so dass der Energiespeicher besonders wartungsarm ist.

Vorzugsweise ist der Hohlkörper derart ausgebildet, dass die darin befindliche Flüssigkeit zur Masseverlagerung mittels einer Verlagerung, insbesondere Verdrehung des Schwungmasseteil, in einen ersten, der Hauptdrehachse zugewandten und zu diesem vergleichsweise gering beanstandeten Bereich und in einen zweiten, der Hauptdrehachse abgewandten und zu diesem vergleichsweise weiter beanstandeten Bereich strömen kann. Insbesondere kann innerhalb des Hohlkörpers zumindest ein Kanal vorgesehen sein, durch welchen die Flüssigkeit von dem ersten in den zweiten Beriech - und zurück - strömen kann. Ferner können innerhalb des Hohlkörpers Leitbleche und/oder ein Labyrinth vorgesehen sein, durch welches das darin befindliche verlagerbare Medium geleitet werden kann, insbesondere derart, dass es zum Verlagern des Massenmittelpunkts des Schwungmasseteils geeignet ist. Wenn der erste Bereich mit Flüssigkeit gefüllt ist, liegt der Massenmittelpunkt des Schwungmasseteils besonders nahe an der Hauptdrehachse des Hauptrotationskörpers, so dass ein durch die Schwerkraft auf den Hauptrotationskörper wirkendes Drehmoment relativ gering ist. Der erste Bereich ist besonders bevorzugt immer dann mit Flüssigkeit gefüllt, wenn sich das Schwungmasseteil im aufsteigenden Bereich am Umfang des Hauptrotationskörpers befindet. Wenn der zweite Bereich mit Flüssigkeit gefüllt ist, liegt der Massenmittelpunkt des Schwungmasseteils besonders weit entfernt von der Hauptdrehachse des Hauptrotationskörpers, so dass ein durch die Schwerkraft auf den Hauptrotationskörper wirkendes Drehmoment relativ groß ist. Der zweite Bereich ist besonders bevorzugt immer dann mit Flüssigkeit gefüllt, wenn sich das Schwungmasseteil im abfallenden Bereich am Umfang des Hauptrotationskörpers befindet. Durch dieses Ungleichgewicht, welches durch die Verlagerung dauerhaft beibehalten werden kann, ist es möglich, die Rotation des Hauptrotationskörpers zu beschleunigen oder zumindest für eine gewisse Zeit aufrecht zu halten.

In einer vorteilhaften Ausgestaltung weist das Schwungmasseteil und/oder zumindest der Hohlkörper zwei-schenkelige Form auf, wobei ein erster Schenkel den ersten Bereich und ein zweiter Schenkel den zweiten Bereich bildet. Insbesondere kann der erste Schenkel derart ausgebildet sein, dass dieser besonders nahe an der Hauptdrehachse des Hauptrotationskörpers angeordnet ist, so dass ein durch die Schwerkraft auf den Hauptrotationskörper wirkendes Drehmoment relativ gering ist, und der zweite Schenkel derart ausgebildet sein, dass dieser besonders weit entfernt von der Hauptdrehachse des Hauptrotationskörpers angeordnet ist, so dass ein durch die Schwerkraft auf den Hauptrotationskörper wirkendes Drehmoment relativ groß ist. Beispielsweise weist das Schwungmasseteil eine L-Form auf, wobei der untere, horizontale Teil des "L" den ersten Bereich und der linke, senkrechte Teil des "L" den zweiten Bereich bilden kann.

Besonders bevorzugt weist das Schwungmasseteil und/oder zumindest der in dem Schwungmasseteil ausgebildete Hohlkörper in einer Querschnittsebene orthogonal zur Hauptdrehachse ein Tragflügelprofil auf, insbesondere mit einem großvolumigen Frontbereich und einem spitz zulaufenden Rückbereich. Der großvolumige Frontbereich ist hierbei bevorzugt in Umlaufdrehrichtung des Hauptrotationskörpers vorne angeordnet. Durch eine Verlagerung des Tragflügelprofils ist es möglich, dass eine darin angeordnete Flüssigkeit sich entweder in dem spitz zulaufenden Rückbereich, welches den ersten Bereich bilden kann, oder in dem großvolumigen Frontbereich befindet, welches den zweiten Bereich bilden kann.

In einer weiteren besonderen Ausgestaltung der Erfindung weist das Schwungmasseteil und/oder der Hohlkörper mindestens einen über einen vordefinierten Umfangsbereich des Hauptrotationskörpers erstreckenden Längshohlkörper auf. Der Längshohlkörper ist vorzugsweise über einen Rotations- oder Winkelbereich des Hauptrotationskörpers zwischen 40 und 200°, besonders bevorzugt zwischen 100 und 180°, um den Hauptrotationskörper angeordnet. Die Form des Längshohlkörper folgt bevorzugt der Umfangsform des Hauptrotationskörpers, so dass der Längshohlkörper in Längserstreckung bevorzugt gebogen ausgebildet ist. Der Längshohlkörper kann insbesondere als ein Schlauch oder eine Röhre ausgebildet sein. In dem Längshohlkörper befindet sich vorzugsweise mindestens ein Medium, insbesondere eine Flüssigkeit, wie Öl. Die Flüssigkeit füllt vorteilhafterweise nicht den gesamten Hohlraum des Längshohlkörpers, so dass in dem Längshohlkörper auch Bereiche mit Luft sein können. Die Verlagerung des Massenmittelpunkts kann hierbei durch ein Strömen des Mediums geändert werden, insbesondere sowohl in radialer Richtung des Hauptrotationskörpes als auch in dessen Umfangsrichtung. Dadurch kann ein Schwung des Hauptrotationskörpers nicht nur durch die radialer Verlagerung des Massenmittelpunkts bzw. Schwerpunktes des Hauptrotationskörpes, sondern auch durch eine umfangsseitige Verlagerung besonders effektiv zum In-Schwunghalten des Hauptrotationskörpers beitragen und genutzt werden. Insbesondere kann die Verlagerung des Massenmittelpunkts bei einem Verzögern bzw. Anhalten des Hauptrotationskörpers von einem in Drehrichtung hinteren Umfangsbereich des Hohlkörpers in einen in Drehrichtung vorderen Umfangsbereich des Hohlkörpers vorteilhaft sein, insbesondere wenn sich der vordere Bereich in der "herabfahrenden" Hälfte des Hauptrotationskörper befindet, und somit durch die Masseverlagerung ein Schwunggeben ermöglicht ist.

Bevorzugt sind mindestens zwei Längshohlkörper vorgesehen, welche sich gemeinsam vorzugsweise über einen Winkelbereich von im Wesentlichen 180° über den Umfang des Hauptrotationskörpers erstrecken. Hierbei kann sich jeder Längshohlkörper über einen Winkelbereich zwischen 90 und 110° über den Umfang des Hauptrotationskörpers erstrecken. Besonders bevorzugt sind mindestens zwei Längshohlkörper über zumindest einen vordefinierten Umfangsbereich radial übereinander angeordnet, insbesondere über einen Winkelbereich zwischen 10 und 45°. Durch diese teilweise Überlagerung der Längshohlkörper können sich durch zwei unterschiedliche Strömungsverhältnisses der in dem Längshohlkörper befindlichen Medien zum In-Schwunghalten vorteilhafte Masse-Momente für den Hauptrotationskörpes ergeben. Ferner kann bevorzugt jeder Längshohlkörper an einer dem Hauptrotationskörpers zugewandten Seite eine nach innen in den Längshohlkörper hineinragende Erhöhung aufweisen, so dass das darin befindliche Medium bei einer Verlagerung von einem ersten Längsende zu einem zweiten Längsende des Längshohlkörpers durch die Erhöhung nach radial außen des Hauptrotationskörpers verlagert wird. Die Erhöhung kann durch einen Knick in einem Schlauch oder einer Röhre gebildet sein. Die Erhöhung kann somit den Gesamthohlraum des Längshohlkörpers in zwei Teilbereiche unterteilen. Hierbei ist ein Verhältnis dieser Unterteilung von im Wesentlichen 20% im Bereich der Drehrichtung zugewandt zu 80% im Bereich der Drehrichtung abgewandt vorteilhaft.

Um den Schwung bzw. die Rotation des Hauptrotationskörpers aufrecht erhalten zu können, kann ein Antrieb vorgesehen sein, insbesondere ein Antrieb einer vorzugsweise umfangsseitig an dem Hauptrotationskörper angeordneten Anstoßeinrichtung zum Versetzen des Hauptrotationskörpers in Drehbewegung. Dadurch kann der Hauptrotationskörper bei einem Stillstand in Drehbewegung versetzt werden.

Vorzugsweise ist der Hauptrotationskörper mit einem Generator koppelbar, so dass zumindest ein Teil der Rotationsenergie des Hauptrotationskörpers in elektrische Energie umwandelbar ist. Dadurch ist insbesondere eine Energieumwandlung ermöglicht.

Der Hauptrotationskörper kann derart ausgebildet sein, dass man diesen manuell, insbesondere von Hand, in Bewegung setzen kann. Insbesondere kann der Hauptrotationskörper auch im drehenden Betrieb von Hand weiter beschleunigt werden. Dies kann vorteilhaft sein, wenn der sich drehende Hauptrotationskörper beginnt, beispielsweise aufgrund der Reibung oder Verschleiß, langsamer zu drehen.

Als Standort für den Hauptrotationskörper eignet sich - je nach Antriebsart, insbesondere manuell angestoßen oder durch eine äußere Kraft, wie Wind - im Prinzip jeder Ort. Insbesondere kann es vorgesehen sein, dass der gesamte Energiespeicher unter Tage bzw. in einem Schacht angeordnet ist. Dadurch kann auf besonders platzsparende Weise Energie gespeichert werden. Beispielsweise kann ein ganzer Tagebau, welcher beispielsweise nach dem Abbau von Braunkohle zur Verfügung steht, mit derartigen mechanischen Energiespeichern bestückt sein, wobei oberhalb der Energiespeicher ein Deckel angeordnet sein kann. Auf dem Deckel wiederum können beispielsweise Windräder oder -turbinen angeordnet sein, welche die kinetische Energie des Windes in kinetische Rotationsenergie umwandeln können und diese Energie an den Energiespeicher weitergeben können. Derartige Schächte mit Deckeln können auch - insbesondere bei dezentralen Anlagen, auf kleineren Grundstücken, wie beispielsweise Privatgrundstücken mit Einfamilienhäusern und Garten vorgesehen sein. Der Deckel kann dazu insbesondere auch mit Rasen oder einer anderen natürlichen Beschaffenheit bedeckt sein.

Ferner können Solarpanels vorgesehen sein, welche elektrische Energie zum Antreiben des Hauptrotationskörpers mittels eines Elektromotors bereitstellen. Dadurch kann insbesondere an Orten, an denen eine Speicherung von elektrischer Energie nicht gewünscht ist, eine Speicherung der Energie in mechanischer, insbesondere kinetischer Form, erfolgen.

Vor diesem Hintergrund ist der Hauptrotationskörper besonders bevorzugt mit einer Windturbine koppelbar, so dass zumindest ein Teil der Rotationsenergie von der Windturbine auf den Hauptrotationskörper und/oder zumindest ein Teil der Rotationsenergie des Hauptrotationskörpers auf die Windturbine übertragbar ist. Eine derartige Kopplung kann immer dann vorteilhaft sein, wenn der Wind in Böen weht und die Windturbine vom Wind inhomogen angetrieben wird oder anzuhalten droht. Darüber hinaus kann eine solche Kopplung für einen Startvorgang einer Windturbine aus dem Stillstand in eine Rotation vorteilhaft sein. Da der Startvorgang der meisten Windturbinen besonders energieintensiv ist und teilweise die Windturbine zunächst mittels eines Antriebs angetrieben wird und erst nach einem In-Rotation-Versetzen ausschließlich vom Wind angetrieben wird, kann durch die Kopplung mit dem vorliegenden Energiespeicher ein besonders effizientes und kostengünstiges In-Rotation-Versetzen der Windturbine realisiert werden. Insbesondere kann zunächst von der Windturbine eine überschüssige kinetische Energie an den Hauptrotationskörper abgegeben werden und dort für einen gewissen Zeitraum gespeichert werden. Bleibt die Windturbine in dieser Zeit stehen und soll wieder in Rotation versetzt werden, kann die am Hauptrotationskörper verbleibende kinetische Energie wiederum von diesem an die Windturbine übertragen werden und die Windturbine hiermit in Rotation versetzt werden. Es sollte deutlich sein, dass der Standort des Energiespeichers durchaus winddicht oder windstill sein kann. Ferner sollte deutlich sein, dass selbstverständlich auch andere Mittel zum Antreiben des Hauptrotationskörpers eingesetzt werden können.

In einer weiteren besonderen Ausgestaltung der Erfindung ist an dem Hauptrotationskörper eine Anstoßeinrichtung zum Versetzen des Hauptrotationskörpers in Drehbewegung vorgesehen, wobei die Anstoßeinrichtung gegenüber einem mit dem Hauptrotationskörper wirkverbundenen Generator radial an dem Hauptrotationskörper weiter außen angeordnet ist, vorzugsweise umfangsseitig an dem Hauptrotationskörper. Die Anstoßeinrichtung kann hierbei einen rotierenden Mitnehmer umfassen, welcher bevorzugt regelmäßig aber diskontinuierlich, insbesondere nur bei Stillstand des Hauptrotationskörpers, mit einem an dem Hauptrotationskörper angeordneten Anschlag in Berührung gelangt und somit dem Hauptrotationskörper rotatorisch Anschwung geben kann. Die zum Anschwung erforderliche Kraft ist radial außen am Hauptrotationskörper besonders gering, so dass der Antrieb nur besonders wenig Energie benötigt. Die Anstoßeinrichtung kann zum Antrieb mit dem Generator über ein Getriebe mechanisch verbunden sein oder einen separaten Antriebsmotor aufweisen, insbesondere einen elektrischen Antriebsmotor. Der elektrische Antriebsmotor zum Antreiben der radial außen angeordneten Anstoßeinrichtung weist somit vorzugsweise eine Spannungsaufnahme von im Wesentlichen nur 1 bis 15% der vom Generator an der Nabe des Hauptrotationskörpers erzeugten elektrischen Spannung auf. Dadurch kann überschüssige Energie für andere Zwecke zur Verfügung gestellt werden.

Das erfindungsgemäße Verfahren zum Speichern von Energie mit einem mechanischen Energiespeicher mit einem um eine im Wesentlichen horizontal angeordnete Hauptdrehachse rotierbar gelagerten, zum Speichern von Rotationsenergie dienenden Hauptrotationskörper und mit mindestens einem an dem Hauptrotationskörper angeordneten, einen Massenmittelpunkt aufweisenden und unter einer Fliehkrafteinwirkung nach radial außen beschleunigenden Schwungmasseteil, sieht vor, dass das Schwungmasseteil gegenüber dem Hauptrotationskörper derart verschwenkt wird, dass der auf einer Bahn um die Hauptdrehachse umlaufende Massenmittelpunkt bei einer Aufwärtsbewegung des Schwungmasseteil in einem geringeren Abstand zur Hauptdrehachse angeordnet ist als bei einer Abwärtsbewegung. Durch dieses am Hauptrotationskörper anliegende Ungleichgewicht, welches durch die Verlagerung dauerhaft beibehalten werden kann, ist es möglich, die Rotation des Hauptrotationskörpers zu beschleunigen oder zumindest für eine gewisse Zeit aufrecht zu halten. Insbesondere kann durch diese gerichtete und stets wiederkehrende Unwucht durch Ausnutzung des sich aufgrund der Schwerkraft ergebenden Drehmoments eine verlängerte Erhaltung der Drehbewegung bewirkt werden.

Alternativ zu dem gegenüber dem Hauptrotationskörper verschwenkbaren Schwungmasseteil hat sich gezeigt, dass auch ein Schwungmasseteil vorteilhaft ist, welches gegenüber dem Hauptrotationskörper feststeht und als ein Hohlkörper ausgebildet ist, insbesondere als ein sich über einen vordefinierten Bereich über den Umfang des Hauptrotationskörpers erstreckender Längshohlkörper, in dem sich ein verlagerbares Medium befindet. Das Medium kann mindestens eine Flüssigkeit umfassen, welche in Abhängigkeit einer Änderung der rotatorischen Umfangsgeschwindigkeit des Hauptrotationskörpers zwischen einem ersten Längsende und einem zweiten Längsende des Hohlkörpers hin und her schwappen kann. Das Medium kann insbesondere bei einem rotatorischen Verzögern des Hauptrotationskörpers in Richtung eines in Drehrichtung des Hauptrotationskörpers vorne bzw. der Drehrichtung zugewandt angeordneten ersten Längsendes des Hohlkörpers und bei einem rotatorischen Beschleunigen des Hauptrotationskörpers in Richtung eines in Drehrichtung des Hauptrotationskörpers hinten bzw. der Drehrichtung abgewandt angeordneten zweiten Längsendes des Hohlkörpers strömen. Dadurch können sich über die Längserstreckung des Längshohlkörpers mit Änderung der Umfangsgeschwindigkeit des Hauptrotationskörpers eine Verlagerung des Massenmittelpunkts zumindest über den Umfang des Hauptrotationskörpers ergeben, vorzugsweise auch über die radiale Anordnung des Mediums in Bezug auf den Hauptrotationskörper.

Gemäß einer bevorzugten Weiterbildung des Verfahrens kann bei Ausgestaltung des Schwungmasseteil als ein mit Flüssigkeit befüllter Hohlkörper die Flüssigkeit zwischen einem ersten, der Hauptdrehachse zugewandten Bereich und einem zweiten, der Hauptdrehachse abgewandten Bereich strömen, wobei die Strömung der Flüssigkeit zwischen dem ersten Bereich und dem zweiten Bereich ausschließlich mittels einer Verschwenkung oder Formgebung des Schwungmasseteils erfolgt bzw. gesteuert wird. Dadurch ist eine besonders effektive und kostengünstige Energiespeicherung ermöglicht.

So kann bei dem gegenüber dem Hauptrotationskörper feststehenden Schwungmasseteil vorgesehen sein, dass der insbesondere als Längshohlkörper ausgebildete Hohlkörper an einer dem Hauptrotationskörpers zugewandten Seite eine in das Innere des Hohlraums des Längshohlkörpers hineinragende Erhöhung aufweist. Dadurch wird das diesen Bereich überströmende Medium bei einer Verlagerung von dem ersten Längsende zu dem zweiten Längsende des Längshohlkörpers durch die Erhöhung in Bezug auf den Hauptrotationskörper nach radial außen verlagert. Ferner erfolgt durch das Überströmen der Erhöhung eine Verlagerung des Massenmittelpunkts, nämlich sowohl in Richtung radial außen des Hauptrotationskörpers als auch in Umfangsrichtung, nämlich bei einem Verzögern des Hauptrotationskörpers in Richtung der Drehrichtung des Hauptrotationskörpers und bei einem Beschleunigen des Hauptrotationskörpers entgegen der Richtung der Drehrichtung des Hauptrotationskörpers. Dadurch kann bei einem entsprechenden Austarieren des Gesamt-Fluidsystems der Hauptrotationskörper eine derart dynamische Unwucht erlangen, welche dessen Rotation beiträgt, aufrechtzuerhalten. Dieses Aufrechterhalten kann bei besonders guten Bedingungen eine Drehung des Hauptrotationskörpers um 362 Grad bewirken, so dass ein kontinuierliches Weiterdrehen bis zu einem zeitlich späteren Stillstand ermöglicht ist. Um bei einem Stehenbleiben des Hauptrotationskörpers in einem "Peak-Punkt" der Masse oder auch ein Zurückdrehen des Hauptrotationskörpers aufgrund der eingestellten Masseverteilung zu vermeiden, kann mit Hilfe der Anstoßeinrichtung mit geringem Energieaufwand ein besonders energiearmes bzw. mit besonders wenig Energieeinsatz erfolgendes In-Bewegungs-Versetzen erfolgen. Die Anstoßeinrichtung kann hierbei als eigenständige Einheit ausgebildet sein, bei der eine Steuerung und/oder Regelung für eine individuelle Ansteuerung der Anstoßeinrichtung vorgesehen ist, oder als eine mit dem Hauptrotationskörper gekoppelte Einheit, welche beispielsweise in Abhängigkeit einer Erkennung einer bestimmten Position des Hauptrotationskörpers, wie beispielsweise über ein Getriebe oder eine Erfassungseinrichtung, einen Mitnehmer zum Anschwunggeben ansteuert, insbesondere dann wenn der "Peak" durch das Verlangsamen der Rotation erkannt wird.

Nachfolgend werden dreizehn Ausführungsbeispiele der Erfindung anhand der Figuren näher erläutert. Gleiche Bezugszeichen bezeichnen gleiche Komponenten. Es zeigen rein schematisch:
- Figuren 1 und 2: - jeweils eine Seitenansicht einer jeweiligen Ausgestaltung eines erfindungsgemäßen mechanischen Energiespeichers;
- Figur 3: - eine Seitenansicht einer weiteren Ausgestaltung eines erfindungsgemäßen mechanischen Energiespeichers in einer Teilschnittdarstellung;
- Figuren 4a und 4b: - jeweils eine Seitenansicht einer weiteren Ausgestaltung eines erfindungsgemäßen mechanischen Energiespeichers in einer Teilschnittdarstellung;
- Figuren 5a und 5b: - jeweils eine Seitenansicht einer weiteren Ausgestaltung eines erfindungsgemäßen mechanischen Energiespeichers in einer Teilschnittdarstellung;
- Figuren 6 bis 12: - jeweils eine Seitenansicht einer jeweiligen Ausgestaltung eines erfindungsgemäßen mechanischen Energiespeichers in einer Teilschnittdarstellung;
- Figuren 13a bis 13f: - jeweils ein Ausschnitt einer Schnittansicht einer Ausgestaltung eines erfindungsgemäßen Schwungmasseteils eines erfindungsgemäßen mechanischen Energiespeichers; und
- Figuren 14a und 14b: - jeweils eine Seitenansicht einer weiteren Ausgestaltung eines erfindungsgemäßen mechanischen Energiespeichers in einer Teilschnittdarstellung;

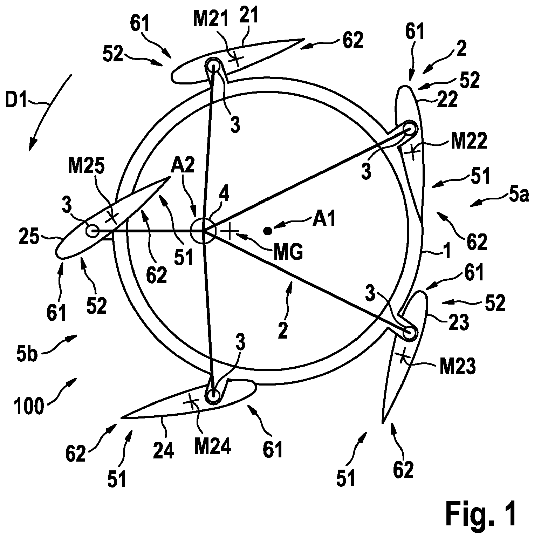

Der in Figur 1 mit dem Bezugszeichen 100 gekennzeichnete mechanische Energiespeicher ist vorliegend als ein dynamisches Schwungrad ausgebildet. Das Schwungrad umfasst einen um eine Rotationsachse A1 drehbar gelagerten Hauptrotationskörper 1 mit vorliegend fünf daran angeordneten, jeweils einen Massenmittelpunkt M21, M22, M23, M24, M25 aufweisenden und unter einer Fliehkrafteinwirkung nach radial außen beschleunigenden Schwungmasseteilen 21, 22, 23, 24, 25. Die Rotationsachse A1 ist im Wesentlichen horizontal ausgerichtet, wobei sich der Hauptrotationskörper 1 in der gezeigten Darstellung gegen den Uhrzeigersinn dreht, wie es mit dem Pfeil D1 gezeigt ist.

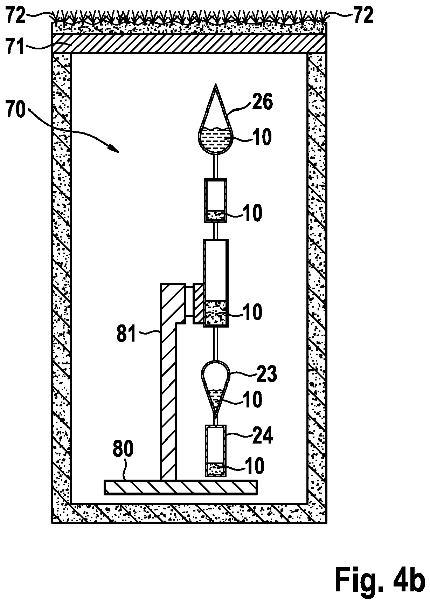

Der Hauptrotationskörper 1 ist vorliegend als ein um die Rotationsachse A1 rotierbar gelagerter und gleichmäßig rund ausgebildeter Ringkörper ausgebildet. Der besseren Übersicht halber ist ein den Hauptrotationskörper 1, insbesondere an einer Nabe der Rotationsachse A1, tragendes Gerüst vorliegend nicht dargestellt. Ein solches Gerüst kann in bekannter und üblicher Bauweise ausgebildet sein, beispielsweise als ein Ständerwerk oder sonstiges Traggerüst. Beispielshaft ist ein solches Gerüst in der Figur 4b gezeigt. Der Hauptrotationskörper 1 weist über dessen Umfang - insbesondere vorliegend homogen - verteilte Aufnahmeeinrichtungen 3 zum Befestigen und/oder beweglichen Lagern der Schwungmasseteile 21, 22, 23, 24, 25 auf. Vorliegend sind diese Aufnahmeeinrichtungen 3 jeweils als eine Bolzen-Öse-Verbindung ausgebildet.

Die Schwungmasseteile 21, 22, 23, 24, 25 sind vorliegend vom Aufbau her gleich ausgebildet und verschwenkbar an dem Hauptrotationskörper 1 gelagert. Insbesondere kann jeder Schwungmasseteil 21, 22, 23, 24, 25 separat und unabhängig gegenüber dem Hauptrotationskörper 1 verschwenkt werden. Zum aktiven bzw. angetriebenen Verschwenken der Schwungmasseteile 21, 22, 23, 24, 25 gegenüber dem Hauptrotationskörper 1 sind die Schwungmasseteile 21, 22, 23, 24, 25 vorliegend über ein Verbindungsmittel 2, beispielsweise ein Gestänge oder Seil, mit einer zentral angeordneten und um eine Drehachse A2 drehbar gelagerte Nabe 4 verbunden. Da die Drehachse A2 parallel beabstandet zu der Rotationsachse A1 angeordnet ist, ergibt sich durch die sich ergebende Exzentrizität über das Verbindungsmittel 2 ein aktives Verschwenken der Schwungmasseteile 21, 22, 23, 24, 25 über den Umfang des Hauptrotationskörpers 1. Insbesondre kann eine Veränderung der Ausrichtung und/Lage der Schwungmasseteile 21, 22, 23, 24, 25 in Bezug auf den Hauptrotationskörper 1 erfolgen. Dabei kann Schwungmasseteile 21, 22, 23, 24, 25 je nach Position am Umfang des Hauptrotationskörpers 1 in eine vordefinierte Ausrichtung und/oder Lage versetzt werden. Insbesondere kann das jeweilige Schwungmasseteile 21, 22, 23, 24, 25 in einem am Hauptrotationskörper 1 aufsteigendem Bereich, welcher bei der Ausgestaltung gemäß Figur 1 im rechten Bildrand vorliegt und mit dem Bezugszeichen 5a gekennzeichnet ist, in Bezug auf den Hauptrotationskörper 1 derart ausgerichtet sein, dass sein Massenmittelpunkt M21, M22, M23, M24, M25 relativ nahe zur Rotationsachse A1 am Hauptrotationskörpers 1 angeordnet ist. Dagegen kann das jeweilige Schwungmasseteile 21, 22, 23, 24, 25 in einem am Hauptrotationskörper 1 abfallenden Bereich, welcher bei der Ausgestaltung gemäß Figur 1 im linken Bildrand vorliegt und mit dem Bezugszeichen 5b gekennzeichnet ist, in Bezug auf den Hauptrotationskörper 1 derart ausgerichtet sein, dass sein Massenmittelpunkt M21, M22, M23, M24, M25 relativ weit entfernt zur Rotationsachse A1 am Hauptrotationskörpers 1 angeordnet ist.

Die Schwungmasseteile 21, 22, 23, 24, 25 sind vorliegend jeweils als sogenannte "Gondeln" ausgebildet. Die in Figur 1 gezeigten Schwungmasseteile 21, 22, 23, 24, 25 umfassen einen festen bzw. massiven Körper. Die Schwungmasseteile 21, 22, 23, 24, 25 weisen hierbei jeweils in ihrem Längsquerschnitt gesehenen, insbesondere in einer Querschnittsebene orthogonal zur Rotationsachse A1, ein im Wesentlichen fischförmiges oder tragflächenförmiges Profil auf, wobei die Schwungmasseteilen 21, 22, 23, 24, 25 mit der jeweiligen Vorderkante des Tragflächenprofils, insbesondere mit einem großvolumigen Frontbereich 61, in gleicher Richtung wie die Drehrichtung des Hauptrotationskörper 1 ausgerichtet sind. Ein spitz zulaufender Rückbereich 62 ist entsprechend an der Hinterkante des Tragflächenprofils ausgebildet.

Der jeweilige Massenmittelpunkt M21, M22, M23, M24, M25 der in Figur 1 gezeigten Schwungmasseteile 21, 22, 23, 24, 25 ist ausschließlich durch die Masse der Gondel als solche gebildet. Die Schwungmasseteile 21, 22, 23, 24, 25 sind hierbei in einem dem Frontbereich 61 zugewandten Abschnitt über die Aufnahmeeinrichtungen 3 an dem Hauptrotationkörper 1 schwenkbar gelagert, wobei sich der jeweilige Massenmittelpunkt M21, M22, M23, M24, M25 in einem dem Rückbereich 62 zugewandten Abschnitt befindet. Dementsprechend kann der Massenmittelpunkt M21, M22, M23, M24, M25 beim Verschwenken des Schwungmasseteils 21, 22, 23, 24, 25 um die Aufnahmeeinrichtungen 3 schwenken und hierbei einen mal mehr und mal weniger weit entfernten Schwerpunkt des Schwungmasseteils 21, 22, 23, 24, 25 relativ zum Hauptrotationskörpers 1 bilden. Wenn diese Verlagerung der einzelnen Massenmittelpunkte M21, M22, M23, M24, M25 derart synchron erfolgt, wie in Figur 1 dargestellt, befindet sich ein Gesamtmassenmittelpunkt MG seitlich versetzt zu der Rotationsachse A1.

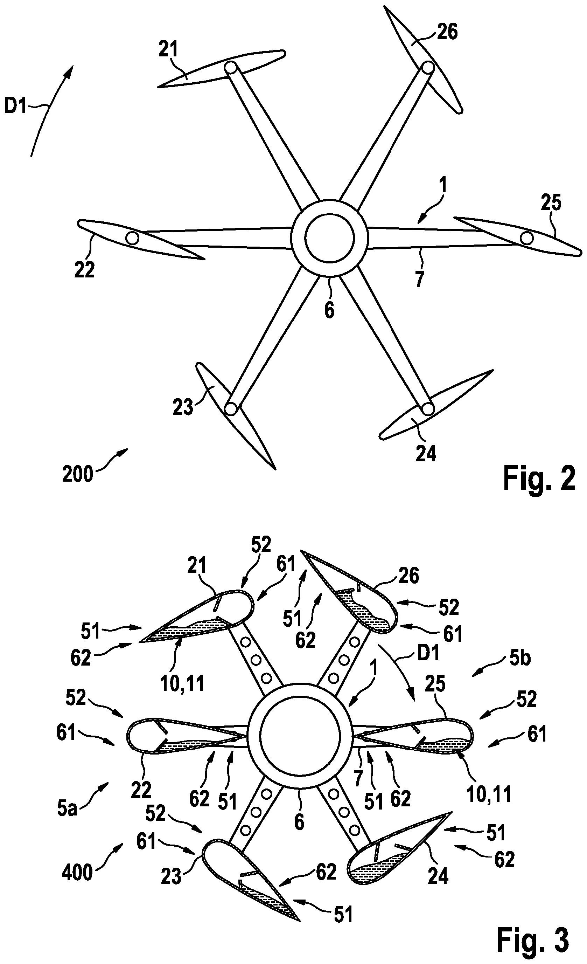

In der Figur 2 ist ein mechanischer Energiespeicher 200 gezeigt, welcher im Grundsatz dem vorgenannten, in Bezug auf Figur 1 beschriebenen Prinzip entspricht, wobei lediglich der konstruktive Aufbau und die vorliegend gezeigte Drehrichtung anders ist.

Bei dem in Figur 2 gezeigten Energiespeicher 200 weist der Hauptrotationskörper 1 mehrere um die Rotationsachse A1 drehbare, insbesondere an einer zentralen Nabe 6 miteinander verbundene sternförmig angeordnete Streben 7 auf, wobei an jedem Ende einer Strebe 7 ein Schwungmasseteil 21, 22, 23, 24, 25, 26 angeordnet ist. Die Rotationsachse A1 ist wiederum im Wesentlichen horizontal ausgerichtet, wobei sich der Hauptrotationskörper 1 vorliegend im Uhrzeigersinn dreht, wie es mit dem Pfeil D1 gezeigt ist.

Die Schwungmasseteile 21, 22, 23, 24, 25, 26 sind wiederum verschwenkbar an dem Hauptrotationskörper 1 gelagert, so dass diese über den Umfang des Hauptrotationskörpers 1 gesehen, in eine jeweils vordefinierte Stellung gebracht werden können. Die Verschwenkung kann beispielsweise durch die Schwerkraft oder mittels einer Einrichtung aktiv angesteuert erfolgen kann. Beispielsweise kann das Verschwenken der Schwungmasseteile 21, 22, 23, 24, 25, 26 vorliegend mittels eines in der Aufnahmeeinrichtung 3 angeordneten Antriebs, wie einem Elektromotor erfolgen. Dadurch ist der Massenmittelpunkt M eines jeden Schwungmasseteils 21, 22, 23, 24, 25, 26 in Abhängigkeit der umlaufenden Position des Schwungmasseteils 21, 22, 23, 24, 25, 26 relativ zum Hauptrotationskörper 1 und/oder relativ zur Hauptdrehachse A verlagerbar.

In Figur 3 ist mit dem Bezugszeichen 400 eine weitere Ausgestaltung eines erfindungsgemäßen Energiespeichers gezeigt. Die Drehrichtung des Hauptrotationskörpers 1 ist mit dem Pfeil D1 gezeigt. 21, 22, 23, 24, 25, 26 derart am Hauptrotationskörper 1 angeordnet, dass sich ihr jeweiliger Massenmittelpunkt bei den herunterfahrenden Schwungmasseteilen 2 relativ weit entfernt vom Zentrum des Hauptrotationskörpers 1 und bei herauffahrenden Schwungmasseteilen 2 relativ nah am Zentrum des Hauptrotationskörpers 1 befindet. Dies ist vorliegend rein schematisch angedeutet.

Wiederum sind die Schwungmasseteile in Form eines Fisches aufgebaut, mit einem kugeligen Frontbereich 61 und einem spitz-zusammenlaufenden Rückbereich 62, vorliegend jedoch als bzw. mit einem Hohlkörper 31. Jeder Hohlkörper 31 ist mit einer vordefinierten Menge eines verlagerbaren Mediums 10, 11 gefüllt, welches den der besseren Übersicht vorliegend nicht bezeichneten Massenmittelpunkte der Schwungmasseteile 21, 22, 23, 24, 25, 26 maßgeblich bestimmt. Das verlagerbare Medium 10, 11 ist in Figur 3 durch gestrichelte Linien innerhalb der Schwungmasseteile 21, 22, 23, 24, 25, 26 dargestellt.

Unter einem verlagerbaren Medium 10, 11 ist im Sinne dieses Dokuments ein jedes Mittel zu verstehen, welches durch eine Verlagerung, insbesondere Verschwenkung des Schwungmasseteils 21, 22, 23, 24, 25, 26 versetzt bzw. verlagert werden kann, das heißt insbesondere durch Rutschen, Fließen oder Rieseln in seiner Position verändert werden kann. Vorliegend ist das verlagerbare Medium beispielsweise als eine Flüssigkeit 10, wie beispielsweise Wasser, und/oder als Sand 11 ausgebildet. Der besseren Übersicht halber wird nachfolgend für das verlagerbare Medium 10, 11 nur noch der Begriff "Flüssigkeit 10" oder "Sand 11" verwendet, wobei stets ein jedes verlagerbares Medium hierunter zu verstehen ist bzw. angewendet werden kann.

Es ist zu beachten, dass in jedem Schwungmasseteile 21, 22, 23, 24, 25, 26 stets die gleiche Menge an Flüssigkeit 10 vorhanden ist. Die Menge der Flüssigkeit 10 ist dabei derart bemessen, dass ein Teil des Hohlraums mit Luft gefüllt ist und ein anderer Teil des Hohlraums mit der Flüssigkeit 10. Die Flüssigkeit 10 kann dadurch bei einer Verlagerung, insbesondere Verschwenkung des Schwungmasseteils 21, 22, 23, 24, 25, 26 innerhalb des Hohlraums in unterschiedliche Bereiche 51, 52 des Hohlraums strömen. Insbesondere kann die Flüssigkeit in einen ersten, der Hauptdrehachse A1 zugewandten und zu dieser vergleichsweise gering beanstandeten Bereich 51 und in einen zweiten, der Hauptdrehachse A1 abgewandten und zu dieser vergleichsweise weiter beanstandeten Bereich 52 strömen. Vorliegend ist der erste Bereich 51 insbesondere durch den spitz zulaufende Rückbereich 62 des jeweiligen Schwungmasseteils 21, 22, 23, 24, 25, 26 gebildet, während der großvolumigen Frontbereich 61 den zweiten Bereich 52 bildet.

Jedes Schwungmasseteil 21, 22, 23, 24, 25, 26 kann dadurch einen in Abhängigkeit der Flüssigkeitsanordnung innerhalb des Hohlraums unterschiedlich angeordneten Massenmittelpunkt M21, M22, M23, M24, M25, M26, auch Massenschwerpunkt genannt, aufweisen. Insbesondere kann der Massenmittelpunkt M21, M22, M23, M24, M25, M26 des jeweiligen Schwungmasseteils 21, 22, 23, 24, 25, 26 in seiner Anordnung relativ zum Körper des Schwungmasseteils 21, 22, 23, 24, 25, 26 variabel bzw. veränderlich sein. Dadurch ist der Massenmittelpunkt M21, M22, M23, M24, M25, M26 eines jeden Schwungmasseteils 21, 22, 23, 24, 25, 26 in Abhängigkeit der umlaufenden Position des Schwungmasseteils 21, 22, 23, 24, 25, 26 relativ zum Hauptrotationskörper 1 und/oder relativ zur Hauptdrehachse A1 verlagerbar.

So liegt beispielsweise der jeweilige Masseschwerpunkt der in Figur 3 im linken Bildteil (aufsteigender Bereich) dargestellten Schwungmasseteile 21, 22, 23 jeweils relativ nahe zur Rotationsachse A1, während der jeweilige Masseschwerpunkte der in Figur 3 im rechten Bildteil (abfallender Bereich) dargestellten Schwungmasseteile 24, 25, 26, welche den Schwungmasseteilen 21, 22, 23 in Bezug auf die Hauptdrehachse A1 im Wesentlichen gegenüberliegend angeordnet sind, vergleichsweise weiter entfernt zur Rotationsachse A1.

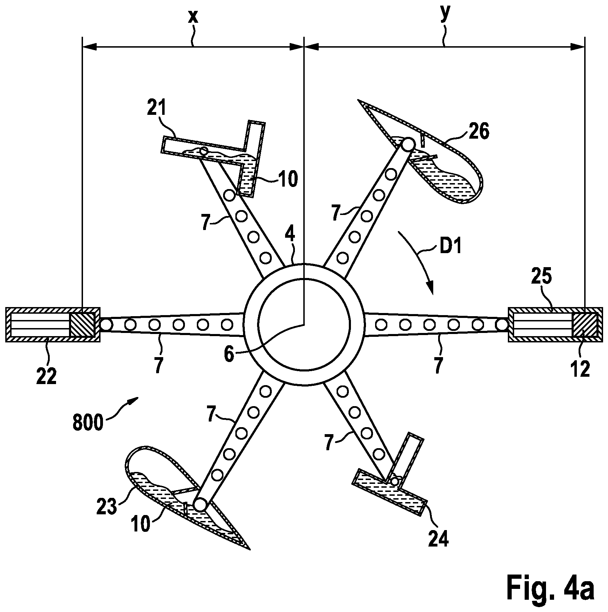

In den Figuren 4a und 4b ist mit dem Bezugszeichen 800 jeweils eine weitere Ausgestaltung eines erfindungsgemäßen Energiespeichers gezeigt. Insbesondere ist ein Energiespeicher mit beispielhaften Ausgestaltungen der Schwungmasseteile 21, 22, 23, 24, 25, 26 gezeigt. Figur 4a zeigt hierbei wiederum die seitliche Frontansicht des Hauptrotationskörpers 1, die Figur 4b eine seitliche Stirnseitenansicht des Hauptrotationskörpers 1. Die Drehrichtung des Hauptrotationskörpers 1 ist mit dem Pfeil D1 gezeigt.

Vorliegend weisen die Schwungmasseteile 21, 22, 23, 24, 25, 26 unterschiedliche, zum Zwecke einer optimierten Gewichtsverlagerung geeignete Körper auf. Im gezeigten Beispiel ist dies beispielhaft ein als Fischform (wie oben) mit einem Hohlkörper 31 und darin befindlichem verlagerbaren Medium 10 ausgebildeter Schwungmasseteil 23, 26, ein als T-Form mit einem Hohlkörper 31 und darin befindlichem verlagerbaren Medium 10 ausgebildeter Schwungmasseteil 21, 24, und ein als Schieberegler mit einem darin verlagerbarem Massivkörper 12. Der Massivkörper 12 kann hierbei innerhalb des Hohlkörpers 31 verlagert werden. Der Massivkörper 12 kann grundsätzlich aus jedem massiven Material ausgebildet sein, beispielsweise aus Stein, Metall, Holz oder Dergleichen. Wenn der Massivkörper 12 aus Stein oder Holz ausgebildet ist, kann die Verlagerung mittels eines mechanischen Stellglied, wie einer Feder oder einer Schiebestange erfolgen. Wenn der Massivkörper 12 als ein Magnet ausgebildet ist, kann dieser insbesondere durch einen elektromagnetischen Impuls versetzt werden.

Wiederum sind die Schwungmasseteile 21, 22, 23, 24, 25, 26 derart am Hauptrotationskörper 1 gelagert, dass sich der Masseschwerpunkt bei den herunterfahrenden Schwungmasseteilen 2 relativ weit entfernt vom Zentrum des Hauptrotationskörpers 1 und bei herauffahrenden Schwungmasseteilen 2 relativ nah am Zentrum des Hauptrotationskörpers 1 befindet. Dies ist vorliegend rein schematisch angedeutet. Durch die Bezugszeichen x und y wird deutlich, wie hierbei der Abstand zwischen dem Masseschwerpunkt der jeweiligen Schwungmasseteile 21, 22, 23, 24, 25, 26 unterschiedlich groß ausgebildet ist. So ist der Abstand x zwischen der Hauptrotationsachse A1 bzw. 6 und des in Figur 4a im linken Bildteil gezeigten herauffahrenden Schwungmasseteils 22 deutlich geringer als der Abstand y zwischen der Hauptrotationsachse A1 bzw. 6 und des in Figur 4a im rechten Bildteil gezeigten herunterfahrenden Schwungmasseteils 25.

In der seitlichen Ansicht in Figur 4b ist beispielhaft ein Gerüst zum Tragen des Hauptrotationskörpers 1 gezeigt. Das Gerüst umfasst ein Fundament 80 und einen Turm 81, an dem der Hauptrotationskörper 1 mit der Hauptrotationsachse A1 bzw. Nabe 6 verbunden ist und drehbar hieran gelagert ist. Der in Figur 4b gezeigte Energiespeicher ist beispielhaft in einem unter der Erde angeordneten Schacht 70 aufgestellt. Der Schacht weist einen Deckel 71 auf, so dass an einer Oberseite des Deckels beispielsweise Erde oder Rasen 72 gedeihen, während darunter Energie mittels des Hauptrotationskörpers 1 speicherbar ist. Der Energiespeicher kann so vollständig untertage angeordnet und betrieben werden.

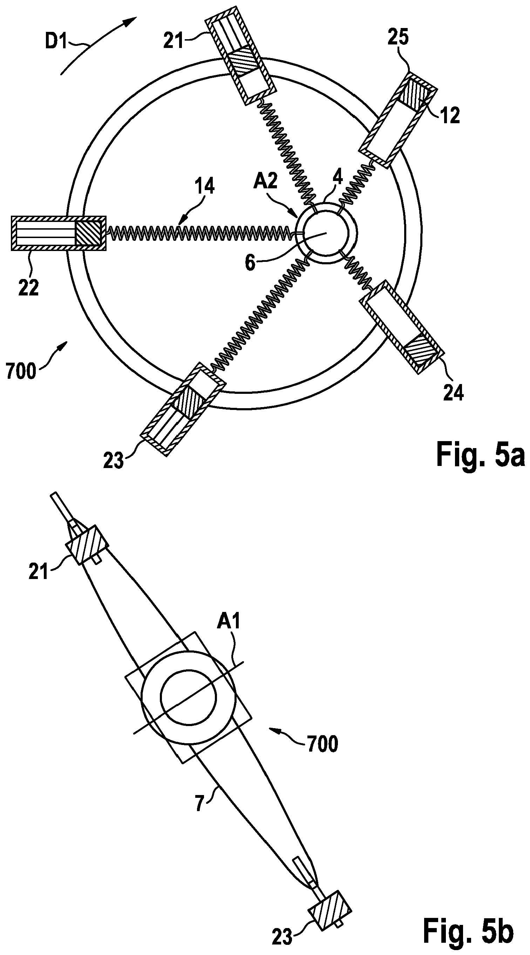

In den Figuren 5a und 5b ist mit dem Bezugszeichen 700 jeweils eine weitere, besondere Ausgestaltung eines erfindungsgemäßen Energiespeichers gezeigt. Bei diesem Beispiel ist - wie bereits am Beispiel in Figur 4a und 4b gezeigt - das in den Schwungmasseteilen 21, 22, 23, 24, 25 befindliche verlagerbare Medium 10 jeweils als ein verlagerbarer Massivkörper 12 ausgebildet.

Der Massivkörper 12 ist vorliegenden entlang einer Schiene an oder in dem als Schwungmasseteil 21, 22, 23, 24, 25 ausgebildeten Körper geführt. Über ein Verbindungsmittel 2, welches vorliegend durch eine Feder 14 gebildet ist, kann der Massivkörper 12 je nach Längenausdehnung der Feder 14 in einen vordefinierten Bereich des Schwungmasseteils 21, 22, 23, 24, 25 versetzt werden. Die Längenausdehnung der Feder ist vorliegend durch die exzentrische Anordnung der die Feder 14 tragenden Nabe 4 realisiert.

In Figur 5b ist eine Draufsicht des Energiespeichers 700 gezeigt. Man erkennt hierbei deutlich die unterschiedlichen Abstände zwischen den Massenschwerpunkten der Schwungmassenteile 21 und 23 in Bezug auf die zentrale Drehachse A1 des Hauptrotationskörpers 1.

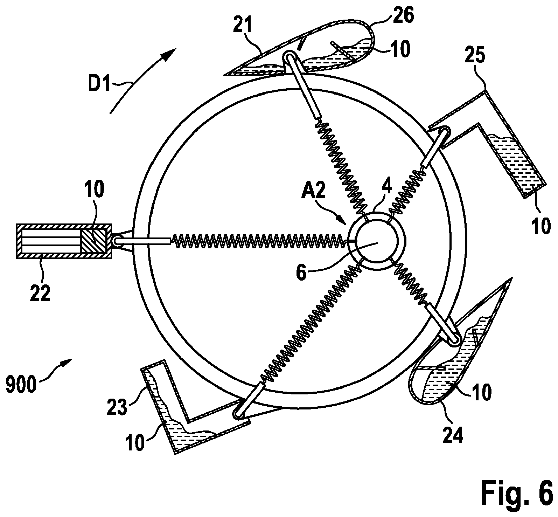

In der Figur 6 ist mit dem Bezugszeichen 900 eine weitere Ausgestaltung eines erfindungsgemäßen Energiespeichers gezeigt, bei der das Prinzip der als Feder 14 ausgebildeten Verbindungsmittel 2 an einem Hauptrotationskörper 1 mit schwenkbar gelagerten Schwungmasseteile 21, 22, 23, 24, 25, 26 gezeigt ist. Hierbei werden die Schwungmasseteile 21, 22, 23, 24, 25, 26 über den Umfang des Hauptrotationskörpers 1 mittels der Feder 14 in eine vordefinierte Stellung verschwenkt, insbesondere derart, dass der Abstand zwischen der Hauptrotationsachse A1 und des Massenmittelpunkts eines herauffahrenden Schwungmasseteils 10 deutlich geringer als der Abstand zwischen der Hauptrotationsachse A1 und des Massenmittelpunkts eines herunterfahrenden Schwungmasseteils 25 ist.

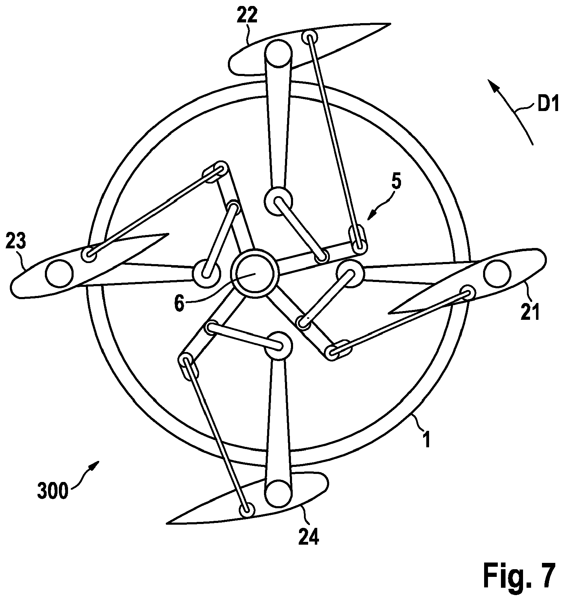

In der Figur 7 ist mit dem Bezugszeichen 300 eine weitere Ausgestaltung eines erfindungsgemäßen Energiespeichers gezeigt, welcher im Grundsatz dem in Bezug auf Figur 1 beschriebenen Prinzip entspricht, wobei der konstruktive Aufbau, insbesondere des Hauptrotationskörper 1, hiervon abweichend ausgestaltet ist. Ferner umfasst der Energiespeicher 300 zusätzlich eine Getriebeanordnung 8 zum Verschwenken der Schwungmasseteile 21, 22, 23, 24.

Bei dem in Figur 7 gezeigten Energiespeicher 300 weist der Hauptrotationskörper 1 mehrere Schwungmasseteile 21, 22, 23, 24 auf, welche über eine um die Rotationsachse A1 drehbare Getriebeanordnung 8 über eine zentrale Nabe 6 miteinander verbunden sind. An jedem Ende eines Getriebestrangs 5 bzw. eines Gestänges ist ein Schwungmasseteil 21, 22, 23, 24 angeordnet. Die Rotationsachse A1 ist wiederum im Wesentlichen horizontal ausgerichtet, wobei sich der Hauptrotationskörper 1 vorliegend gegen den Uhrzeigersinn dreht, wie es mit dem Pfeil D1 gezeigt ist.

Die Schwungmasseteile 21, 22, 23, 24 sind wiederum verschwenkbar an dem Hauptrotationskörper 1 gelagert, wobei eine Verschwenkung mittels der Getriebeanordnung 8 erfolgt. Dadurch ist wiederum der Massenmittelpunkt eines jeden Schwungmasseteils 21, 22, 23, 24 in Abhängigkeit der umlaufenden Position des Schwungmasseteils 21, 22, 23, 24 relativ zum Hauptrotationskörper 1 und/oder relativ zur Hauptdrehachse A1 verlagerbar.

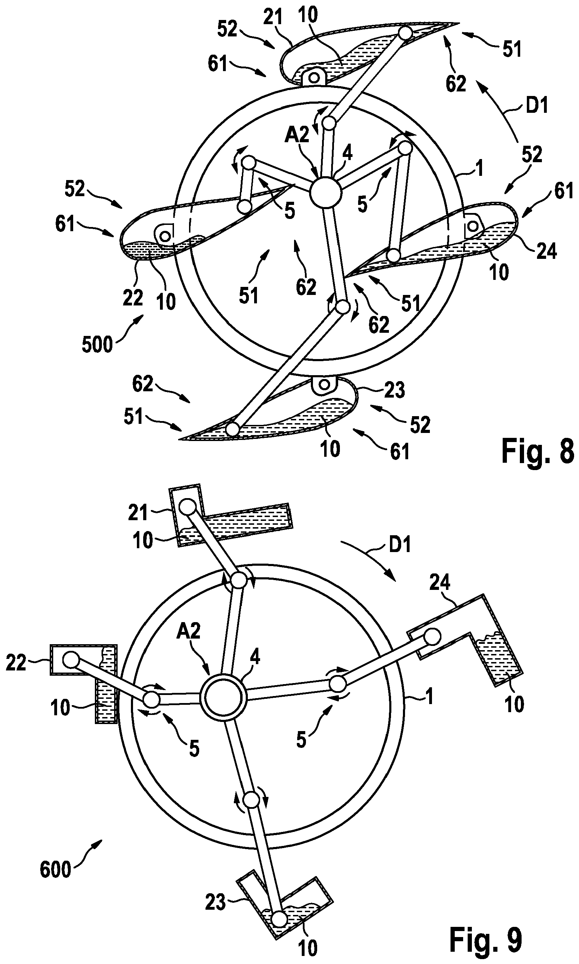

In der Figur 8 ist mit dem Bezugszeichen 500 eine weitere Ausgestaltung des erfindungsgemäßen mechanischen Energiespeichers gezeigt, welcher im Grundsatz dem in Bezug auf Figur 7 beschriebenen Prinzip entspricht, wobei die Schwungmasseteile 21, 22, 23, 24 hierbei als Hohlkörper 31 mit einem darin befindlichen Medium 10 ausgebildet sind. Der Antrieb der Verschwenkung der Schwungmasseteile 21, 22, 23, 24 erfolgt wiederum mittels einer Getriebeanordnung 8.

In der Figur 9 ist mit dem Bezugszeichen 600 eine weitere Ausgestaltung des erfindungsgemäßen mechanischen Energiespeichers gezeigt, welcher im Grundsatz dem in Bezug auf Figur 8 beschriebenen Prinzip entspricht, wobei die Schwungmasseteile 21, 22, 23, 24 hierbei eine andere Form aufweisen.

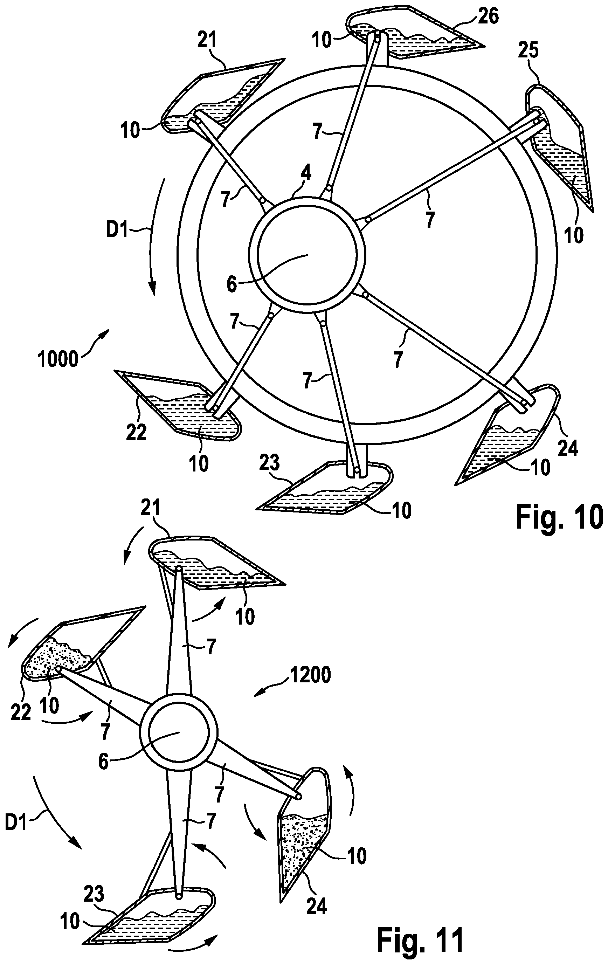

In der Figur 10 ist mit dem Bezugszeichen 1000 eine weitere Ausgestaltung des erfindungsgemäßen mechanischen Energiespeichers gezeigt, welcher im Wesentlichen Schwungmasseteile 21, 22, 23, 24, 25, 26 wie in Figur 7 gezeigt und eine besondere Art einer Getriebeanordnung 8 aufweist. Insbesondere erfolgt hierbei die Verschwenkung der Schwungmasseteile 21, 22, 23, 24, 25, 26 mittels längenveränderbaren Bändern, welche die am Hauptrotationskörper 1 verschwenkbar gelagerten Schwungmasseteil 21, 22, 23, 24, 25, 26 wie eine Feder unterschiedlich stark anziehen. Ferner ist hierbei die Anordnung der Schwungmasseteile 21, 22, 23, 24, 25, 26 über den Umfang des Hauptrotationskörper 1 ungleichmäßig, so dass sich hierbei ein besonders effektives Schwungverhältnis ergeben kann.

In der Figur 11 ist mit dem Bezugszeichen 1200 eine weitere Ausgestaltung des erfindungsgemäßen mechanischen Energiespeichers gezeigt, welcher im Wesentlichen Schwungmasseteile 21, 22, 23, 24 wie in Figur 7 gezeigt und eine besondere Art einer Getriebeanordnung 8 aufweist. Die Getriebeanordnung ist hierbei nicht zentral sondern separat an den einzelnen Streben und für jedes Schwungmasseteile 21, 22, 23, 24 einzeln angeordnet.

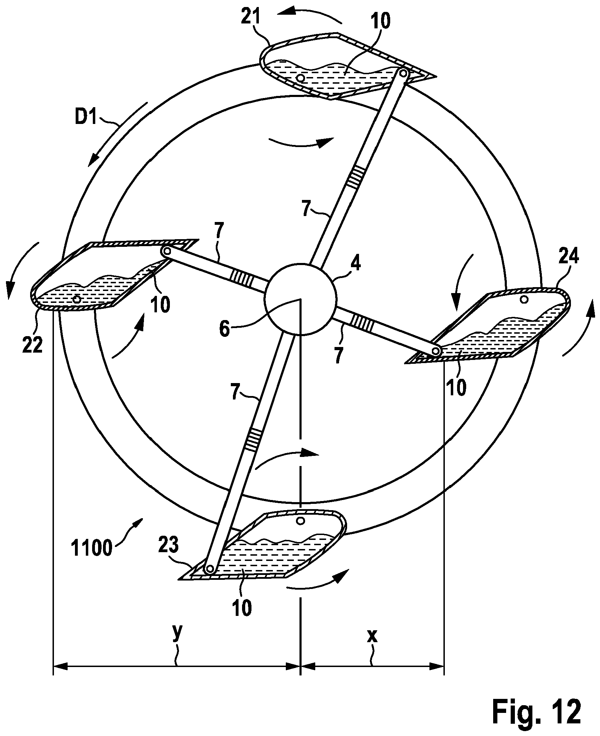

In der Figur 12 ist mit dem Bezugszeichen 1100 eine weitere Ausgestaltung des erfindungsgemäßen mechanischen Energiespeichers gezeigt, welcher im Wesentlichen Schwungmasseteile 21, 22, 23, 24 wie in Figur 7 gezeigt und eine besondere Art einer Getriebeanordnung 8 aufweist. Insbesondere erfolgt hierbei die Verschwenkung der Schwungmasseteile 21, 22, 23, 24 mittels längenveränderbaren Stangen, welche beispielsweise teleskopierbar oder spindelartig verlängerbar sind. Diese können die am Hauptrotationskörper 1 verschwenkbar gelagerten Schwungmasseteile 21, 22, 23, 24 dadurch derart unterschiedlich stark anziehen oder wegdrücken, dass sich diese dauerhaft am Hauptrotationskörper 1 drehen, insbesondere derart, dass sich ihr jeweiliger Massenmittelpunkt immer dann besonders weit radial außen befindet, wenn sich das jeweilige Schwungmasseteile 21, 22, 23, 24 auf dem herabfahrenden Teil des Hauptrotationskörper 1 befindet.

Betrachtet man nun das jeweilige Gesamtsystem der jeweils in den Figuren 1 bis 12 dargestellten Energiespeicher ergibt sich ein gemeinsamer Masseschwerpunkt MG für sämtliche Schwungmasseteile 21, 22, 23, 24, 25, 26 - zur besseren Übersicht nur in Figur 1 gezeigt -, welcher um eine geringe Abweichung exzentrisch bzw. in der Senkrechten beabstandet von der Rotationsachse A1 liegt. Durch diesen Versatz des Gesamtmasseschwerpunkts MG liegt in Bezug auf die Rotationsachse A1 an dem Hauptrotationskörper 1 in dem abfallenden Bereich 5b ein gegenüber dem aufsteigenden Bereich 5a größeres Dreh- oder Hebelmoment vor. Dadurch ist ermöglicht, dass der Hauptrotationskörper 1 im abfallenden Bereich 5b eine Beschleunigung erfährt, welche dazu genutzt werden kann, dass die Rotation des erfindungsgemäßen Hauptrotationskörpers 1 gegenüber einem gewöhnlichen Hauptrotationskörper 1 mit zentrischem Gesamtmasseschwerpunkt zumindest um eine gewisse Zeit verlängert werden kann bzw. zeitlich länger aufrecht gehalten werden kann. Der Hauptrotationskörpers 1 kann daher - nachdem dieser durch eine äußere Krafteinwirkung in Rotation versetzt wurde - zum Speichern von kinetischer Energie genutzt werden.

Beispielsweise kann der Hauptrotationskörpers 1 über die Rotationsachse A1 mit der Nabe einer nicht-dargestellten Windturbine verbunden sein. Wenn der Wind beispielsweise in Böen weht oder über eine gewisse Zeit aussetzt, kann die mittels der Windturbine erreichte kinetische Energie auf den Hauptrotationskörper 1 übertragen werden und dort vorteilhafterweise für die Dauer einer Windflaute gespeichert werden. Nach Beendigung der Windflaute kann zumindest der noch am Hauptrotationskörper 1 vorhandene, verbleibender Teil der kinetischen Energie mittels einer Rückübertragung von dem Hauptrotationskörper 1 auf die Windturbine rückübertragen werden, so dass das Windrad eine bestimmte Vorlaufrotation erhalten kann. Dadurch können insbesondere energieaufwändige Startvorgänge von Windturbinen schneller und effektiver erfolgen.

Ferner kann der Hauptrotationskörper 1 direkt mit einem nicht-dargestellten Generator koppelbar sein, so dass zumindest ein Teil der Rotationsenergie des Hauptrotationskörpers 1 in elektrische Energie umwandelbar ist. Dies kann beispielsweise vorteilhaft sein, wenn - beispielsweise bei einer Windflaute - nicht nur die kinetische Energie gespeichert werden soll, sondern bevorzugt weiter elektrische Energie benötigt wird.

Folglich kann mit dem um die im Wesentlichen horizontal angeordnete Hauptdrehachse A1 rotierbar gelagerten Hauptrotationskörper 1 und mit den am Hauptrotationskörper 1 angeordneten, jeweils einen Massenmittelpunkt M21, M22, M23, M24, M25 M26 aufweisenden und unter einer Fliehkrafteinwirkung nach radial außen beschleunigenden Schwungmasseteilen 21, 22, 23, 24, 25, 26, wobei das Schwungmasseteil 21, 22, 23, 24, 25, 26 gegenüber dem Hauptrotationskörper 1 derart verschwenkt wird, dass der auf einer Bahn um die Hauptdrehachse A umlaufende Massenmittelpunkt M bei einer Aufwärtsbewegung des Schwungmasseteil 21, 22, 23, 24, 25, 26 in einem geringeren Abstand zur Hauptdrehachse A angeordnet ist als bei einer Abwärtsbewegung, eine Rotationsenergie zwischengespeichert werden.

Hierbei kann die in dem Schwungmasseteil 21, 22, 23, 24, 25, 26 befindliche Flüssigkeit 10 mittels einer Verschwenkung des Schwungmasseteils 21, 22, 23, 24, 25, 26) zwischen dem ersten, der Hauptdrehachse A1 zugewandten Bereich 51 und dem zweiten, der Hauptdrehachse A1 abgewandten Bereich 52 hin und her strömen, so dass sich der Massenmittelpunkt M21, M22, M23, M24, M25, M26 des Schwungmasseteils 21, 22, 23, 24, 25, 26 verlagert. Die Veränderung der Massenmittelpunkte M21, M22, M23, M24, M25, M26 kann also insbesondere über eine Verschwenkung der Schwungmasseteile 21, 22, 23, 24, 25, 26 gesteuert werden.

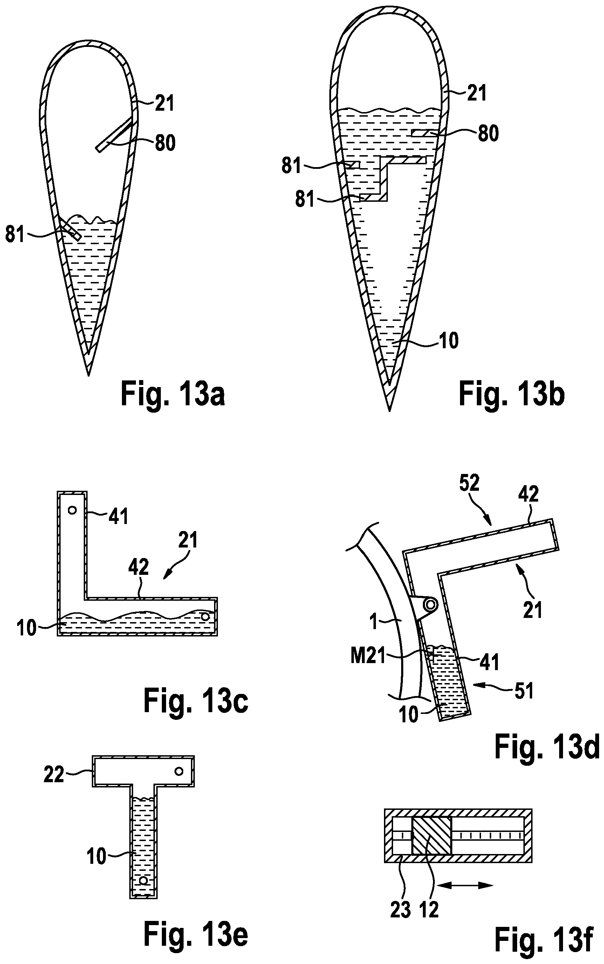

In den Figuren 13a bis 13f sind jeweils beispielhaft Ausgestaltungen der Schwungmasseteile 21, 22, 23, 24, 25, 26 gezeigt. Der besseren Übersicht sind die Schwungmasseteile hierbei nur mit dem Bezugszeichen 21 bzw. 22 gekennzeichnet, die gezeigte Ausgestaltung kann jedoch an jedem Schwungmasseteil 21, 22, 23, 24, 25, 26 angewendet werden. Figuren 13a und 13b zeigen das Schwungmasseteil 21 mit einem Querschnitt in Form eines Tragflächenprofils, wobei das verlagerbare Medium 10 durch Leitbleche 80, 81 geleitet wird.

In der Figur 13c und 13d ist ein Ausschnitt einer besonderen Ausgestaltung eines als Schwungmasseteils 21 einsetzbaren Formkörpers gezeigt. Hierbei weist das Schwungmasseteil 21 und/oder zumindest der Hohlkörper 31 zwei Schenkel 41, 42 auf, wobei ein erster Schenkel 41 den vorerläuterten ersten, der Hauptdrehachse A1 zugewandten und zu dieser vergleichsweise gering beanstandeten Bereich 51 bildet, und ein zweiter Schenkel 42 den vorerläuterten zweiten, der Hauptdrehachse A abgewandten und zu dieser vergleichsweise weiter beanstandeten Bereich 52 bildet. In Figur 13e ist ein als T-Form ausgebildetes Schwungmasseteil 22 gezeigt. In Figur 13f ist der in Figuren 4a, 4b, 5a, 5b und 6 angewendete Massivkörper 12 im Detail gezeigt. Die Verschiebbarkeit ist hierbei mit dem Doppelpfeil angedeutet.

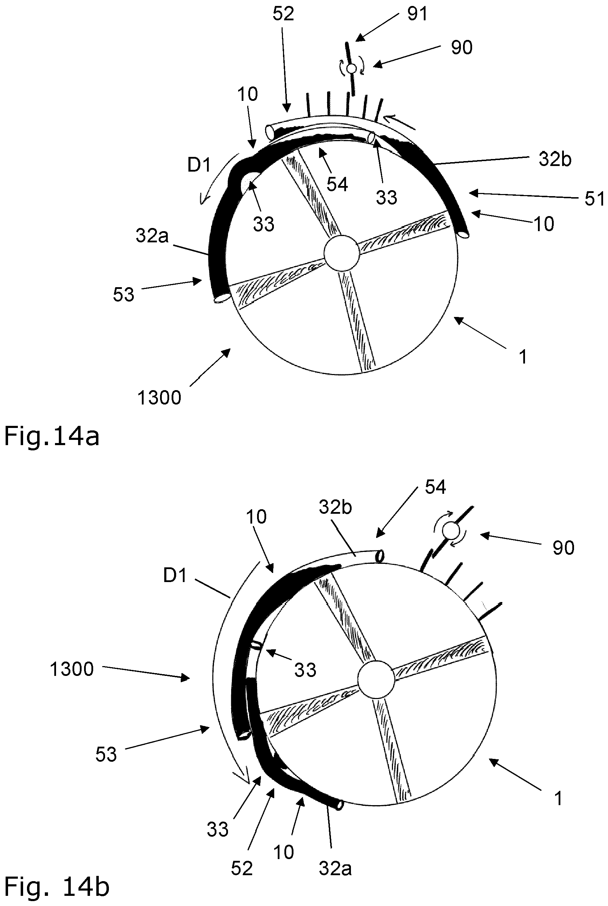

In den Figuren 14a und 14b ist eine weitere Ausgestaltung eines erfindungsgemäßen mechanischen Energiespeichers 1300 gezeigt. Das hierbei gezeigte Schwungrad 1 ist in der Figur 14a in einer ersten Position und in der Figur 14b in einer zweiten Position gezeigt. Hierbei sind zwei mit dem Schwungrad 1 ortsfest verbundene Schwungmasseteile vorgesehen, welche als Hohlkörper 31, insbesondere als Längshohlkörper 32a, 32b ausgebildet sind. In jedem der Längshohlkörper 32a, 32b befindet sich eine Flüssigkeit 10. Die Längshohlkörper 32a, 32b sind vorliegend beispielhaft als flexible Schläuche dargestellt.

Die in den Längshohlkörper 32a, 32b befindliche Flüssigkeit 10 kann zwischen einem ersten Hohlkörperbereich 51, welcher einem der Drehrichtung D1 abgewandten zweiten Längsende 54 zugewandt ist, und einem zweiten Hohlkörperbereich 52, welche einem der Drehrichtung D1 zugewandten ersten Längsende 53 zugewandt ist, hin und her strömen. Der erste Hohlkörperbereich 51 und der zweite Hohlkörperbereich 52 sind durch eine Erhöhung 33 unterteilt.

Die Erhöhung 33 betrifft eine im Inneren des Längshohlkörpers 32a, 32b ausgebildete, in Richtung radial außen des Hauptrotationskörpers 1 ins Innere hervorstehende Anhebung oder Erhöhung des umfangsseitigen Bodens. Dadurch wird das diesen Bereich 33 überströmende Medium 10 bei einer Verlagerung von dem hinteren Längsende 54 zu dem vorderen Längsende 53 des Längshohlkörpers 32a, 32b durch die Erhöhung 33 in Bezug auf den Hauptrotationskörper 1 nach radial außen verlagert. Ferner erfolgt durch das Überströmen der Erhöhung 33 eine Verlagerung des Massenmittelpunkts, nämlich sowohl in Richtung radial außen des Hauptrotationskörpers 1 als auch in Umfangsrichtung, nämlich bei einem Verzögern des Hauptrotationskörpers 1 in Richtung der Drehrichtung D1 des Hauptrotationskörpers 1 und bei einem Beschleunigen des Hauptrotationskörpers 1 entgegen der Richtung der Drehrichtung D1 des Hauptrotationskörpers 1. Dadurch kann bei einem entsprechenden Austarieren des Gesamt-Fluidsystems der Hauptrotationskörper 1 eine derart dynamische Unwucht erlangen, welche dessen Rotation beiträgt, aufrechtzuerhalten. Dieses Aufrechterhalten kann bei besonders guten Bedingungen eine Drehung des Hauptrotationskörpers um im wesentlichen 362 Grad bewirken, so dass ein kontinuierliches Weiterdrehen bis zu einem zeitlich späteren Stillstand ermöglicht ist.

Um bei einem Stehenbleiben des Hauptrotationskörpers 1 in einem "Peak-Punkt" der Masse oder auch ein Zurückdrehen des Hauptrotationskörpers 1 aufgrund der eingestellten Masseverteilung zu vermeiden, kann mit Hilfe der Anstoßeinrichtung 90 mit geringem Energieaufwand ein besonders energiearmes bzw. mit besonders wenig Energieeinsatz erfolgendes In-Bewegungs-Versetzen erfolgen. Die Anstoßeinrichtung 90 ist dazu insbesondere radial außen am Rad angeordnet. Die Anstoßeinrichtung 90 kann über ein Getriebe mit der Nabe des Hauptrotationskörpers 1 verbunden sein oder ein eigenen Antrieb, wie ein Elektromotor aufweisen. In der Figur 14a ist die Anstoßeinrichtung 90 beispielhaft oberhalb des Hauptrotationskörpers 1 gezeigt, in der Figur 14b in einem Seitenbereich.

Die Anstoßeinrichtung 90 weist insbesondere mindestens einen Mitnehmer 91 auf, welcher mit in einem bestimmten umfangreich an dem Hauptrotationskörper 1 angeordneten Anstoßmitteln in Kontakt gelangen kann.

Der Mitnehmer 91 gelangt somit insbesondere regelmäßig aber diskontinuierlich, insbesondere nur bei Stillstand des Hauptrotationskörpers 1, mit dem an dem Hauptrotationskörper 1 angeordneten Anschlag in Berührung und kann somit dem Hauptrotationskörper 1 rotatorisch Anschwung geben. Selbstverständlich kann auch als Mitnehmer auch ein anderes Antriebmittel vorgesehen sein, wie beispielsweise ein elektromagnetischer Antrieb. Die zum Anschwung erforderliche Kraft ist radial außen am Hauptrotationskörper 1 besonders gering, so dass der Antrieb nur besonders wenig Energie benötigt. Der elektrische Antriebsmotor weist vorzugsweise eine Spannungsaufnahme von im Wesentlichen nur 1 bis 15% der vom Generator an der Nabe des Hauptrotationskörpers erzeugten elektrischen Spannung auf. Dadurch kann überschüssige Energie für andere Zwecke zur Verfügung gestellt werden.

Es sollte deutlich sein, dass der Schutzbereich der vorliegenden Erfindung nicht auf die beschriebenen Ausführungsbeispiele begrenzt ist. Insbesondere der Aufbau des Hauptrotationskörpers und der Schwungmasseteile kann - ohne den Kern der Erfindung zu verändern - durchaus modifiziert sein.

### Bezugszeichenliste:

- 1: Hauptrotationskörper
- 2: Verbindungsmittel
- 3: Aufnahmeeinrichtung
- 4: Nabe
- 5: Getriebestrang
- 5a: aufsteigender Bereich
- 5b: herunterfallender Bereich
- 6: Nabe
- 7: Strebe
- 8: Getriebeanordnung
- 10: Flüssigkeit
- 11: Sand
- 12: Massivkörper
- 14: Feder
- 21: Schwungmasseteil
- 22: Schwungmasseteil
- 23: Schwungmasseteil
- 24: Schwungmasseteil
- 25: Schwungmasseteil
- 26: Schwungmasseteil
- 31: Hohlkörper
- 32a: erster Schlauch
- 32b: zweiter Schlauch
- 33: Erhöhung, Knick
- 41: Schenkel
- 42: Schenkel
- 51: Hohlkörper-Bereich
- 52: Hohlkörper-Bereich
- 53: erstes Längsende, Hohlkörper-Frontbereich
- 54: zweites Längsende, Hohlkörper-Heckbereich
- 61: Frontbereich
- 62: Rückbereich
- 70: Schacht
- 71: Deckel
- 72: Rasen
- 80: Leitblech
- 81: Leitblech
- 90: Antroßeinrichtung
- 91: Mitnehmer, Propeller

- A1: Hauptdrehachse
- A2: Drehachse
- D1: Hauptdrehrichtung
- M21: Massenmittelpunkt
- M22: Massenmittelpunkt
- M23: Massenmittelpunkt
- M24: Massenmittelpunkt
- M25: Massenmittelpunkt
- M26: Massenmittelpunkt
- MG: Gesamtmassenmittelpunkt
100, 200, 300, 400, 500, 600,

- 700, 800, 900, 1000, 1100, 1200, 1300: jeweils Energiespeicher

## Patentansprüche

1. Mechanischer Energiespeicher (100, 200, 300, 400, 500, 600, 700, 800, 900, 1000, 1100, 1200, 1300), insbesondere dynamisches Schwungrad, mit einem um eine im Wesentlichen horizontal angeordnete Hauptdrehachse (A1) rotierbar gelagerten, zum Speichern von Rotationsenergie dienenden Hauptrotationskörper (1) und mit mindestens einem an dem Hauptrotationskörper (1) angeordneten, einen Massenmittelpunkt (M21, M22, M23, M24, M25, M26) aufweisenden und unter einer Fliehkrafteinwirkung nach radial außen beschleunigenden Schwungmasseteil (21, 22, 23, 24, 25, 26),
**dadurch gekennzeichnet, dass**
das Schwungmasseteil (21, 22, 23, 24, 25, 26) und/oder der Massenmittelpunkt (M21, M22, M23, M24, M25, M26) in Abhängigkeit der am Hauptrotationskörper (1) umlaufenden Position des Schwungmasseteils (21, 22, 23, 24, 25, 26) relativ zum Hauptrotationskörper (1) verlagerbar ist.

2. Energiespeicher nach Anspruch 1, **dadurch gekennzeichnet,**
**dass** der Massenmittelpunkt (M21, M22, M23, M24, M25, M26) eines ersten Schwungmasseteils (21, 22, 23, 24, 25, 26) radial zur Hauptdrehachse (A1) weiter entfernt liegend angeordnet ist als der Massenmittelpunkt (M21, M22, M23, M24, M25, M26) eines zweiten Schwungmasseteils (21, 22, 23, 24, 25, 26), insbesondere eines dem ersten Schwungmasseteils (21, 22, 23, 24, 25, 26) in Bezug auf die Hauptdrehachse (A1) im Wesentlichen gegenüberliegend angeordneten zweiten Schwungmasseteils (21, 22, 23, 24, 25, 26), so dass auf den Hauptrotationskörper (1) ein Drehmoment wirkt, welches die Rotation des Hauptrotationskörpers (1) beschleunigen oder zumindest die Rotationszeit verlängern kann.

3. Energiespeicher nach einem der Ansprüche 1 oder 2, **dadurch gekennzeichnet, dass** der Massenmittelpunkt (M21, M22, M23, M24, M25, M26) unabhängig von einer Verlagerung das Schwungmasseteils (21, 22, 23, 24, 25, 26) gegenüber der Hauptdrehachse (A1) verlagerbar ist.

4. Energiespeicher nach einem der voranstehenden Ansprüche, **dadurch gekennzeichnet, dass** das Schwungmasseteil (21, 22, 23, 24, 25, 26) an dem Hauptrotationskörper (1) verschwenkbar gelagert und/oder geführt ist, und insbesondere aktiv verlagert werden kann, wobei vorzugsweise mindestens zwei Schwungmasseteile (21, 22, 23, 24, 25, 26) mechanisch über ein Gestänge und/oder Getriebe (8) miteinander verbunden sind, und/oder das Schwungmasseteil (21, 22, 23, 24, 25, 26) als ein Festkörperteil ausgebildet ist.

5. Energiespeicher nach einem der voranstehenden Ansprüche, **dadurch gekennzeichnet, dass** das Schwungmasseteil (21, 22, 23, 24, 25, 26) mindestens einen Hohlkörper (31) aufweist, in dem sich ein verlagerbares Medium (10) befindet, wie beispielsweise eine Flüssigkeit, Sand oder ein Magnet, wobei vorzugsweise in jedem Schwungmasseteil (21, 22, 23, 24, 25, 26) im Wesentlichen die gleiche Menge bzw. die gleiche Masse an verlagerbarem Medium (10) angeordnet ist, und vorzugsweise in jedem Schwungmasseteil (21, 22, 23, 24, 25, 26) dauerhaft im Wesentlichen die gleiche Menge des verlagerbaren Mediums (10) angeordnet ist.

6. Energiespeicher nach Anspruch 5, **dadurch gekennzeichnet, dass** der Hohlkörper (31) derart ausgebildet ist, dass das darin befindliche verlagerbare Medium (10) für eine Verlagerung des jeweiligen Massenmittelpunkts (M21, M22, M23, M24, M25, M26) in einen ersten, der Hauptdrehachse (A1) zugewandten Bereich (51) und in einen zweiten, der Hauptdrehachse (A) abgewandten Bereich (52) verlagerbar ist.

7. Energiespeicher nach Anspruch 6, **dadurch gekennzeichnet, dass** das Schwungmasseteil (21, 22, 23, 24, 25, 26) und/oder zumindest der Hohlkörper (31) zwei Schenkel (41, 42) aufweist, wobei ein erster Schenkel (41) den ersten Bereich (51) bildet und ein zweiter Schenkel (42) den zweiten Bereich (52) bildet.

8. Energiespeicher nach einem der Ansprüche 1 bis 6, **dadurch gekennzeichnet, dass** das Schwungmasseteil (21, 22, 23, 24, 25, 26) und/oder zumindest der Hohlkörper (31) ein Tragflügelprofil aufweist, insbesondere mit einem großvolumigen Frontbereich (61) und einem spitz zulaufenden Rückbereich (62).

9. Energiespeicher nach einem der voranstehenden Ansprüche, **dadurch gekennzeichnet, dass** das Schwungmasseteil (21, 22, 23, 24, 25, 26) und/oder der Hohlkörper (31) mindestens einen über einen vordefinierten Umfangsbereich, insbesondere über einen Winkelbereich zwischen 40 und 200°, vorzugsweise zwischen 100 und 180°, sich um den Hauptrotationskörper (1) erstreckenden, gebogenen Längshohlkörper (32a, 32b) aufweist, insbesondere einen Schlauch oder eine Röhre, mit mindestens einem darin befindlichen Medium, insbesondere einer Flüssigkeit (10), wie einem Öl.

10. Energiespeicher nach Anspruch 9, **dadurch gekennzeichnet, dass** mindestens zwei Längshohlkörper (32a, 32b) vorgesehen sind, welche sich gemeinsam vorzugsweise über einen Winkelbereich von im Wesentlichen 180° über den Umfang des Hauptrotationskörpers (1) erstrecken, wobei vorzugsweise sich jeder Längshohlkörper (32a, 32b) über einen Winkelbereich zwischen 90 und 110° über den Umfang des Hauptrotationskörpers (1) erstrecken, und vorzugsweise mindestens zwei Längshohlkörper (32a, 32b) über zumindest einen vordefinierten Umfangsbereich radial übereinander angeordnet sind, insbesondere über einen Winkelbereich zwischen 10 und 45°, wobei jeder Längshohlkörper (32a, 32b) an einer dem Hauptrotationskörpers (1) zugewandten Seite eine nach innen in den Längshohlkörper (32a, 32b) hineinragende Erhöhung (33) aufweist, so dass das darin befindliche Medium (10) bei einer Verlagerung von einem zweiten Längsende (54) zu einem ersten Längsende (53) des Längshohlkörpers (32a, 32b) durch die Erhöhung (33) nach radial außen des Hauptrotationskörpers (1) verlagert wird, wobei die Erhöhung (33) vorzugsweise durch einen Knick in dem Längshohlkörper (32a, 32b) gebildet ist.

11. Energiespeicher nach einem der voranstehenden Ansprüche, **dadurch gekennzeichnet, dass** ein vorzugsweise umfangsseitig an dem Hauptrotationskörper (1) angeordneter Antrieb vorgesehen ist, insbesondere ein Antrieb einer Anstoßeinrichtung (90) zum Versetzen des Hauptrotationskörpers (1) in Drehbewegung.

12. Energiespeicher nach einem der voranstehenden Ansprüche, **dadurch gekennzeichnet, dass** der Hauptrotationskörper (1) mit einem Generator koppelbar ist, so dass zumindest ein Teil der Rotationsenergie des Hauptrotationskörpers (1) in elektrische Energie umwandelbar ist, und/oder der Hauptrotationskörper (1) mit einer Windturbine koppelbar ist, so dass zumindest ein Teil der Rotationsenergie des Hauptrotationskörpers (1) auf die Windturbine übertragbar ist.

13. Energiespeicher nach einem der voranstehenden Ansprüche, **dadurch gekennzeichnet, dass** an dem Hauptrotationskörper (1) eine Anstoßeinrichtung (90) zum Versetzen des Hauptrotationskörpers (1) in Drehbewegung vorgesehen ist, wobei die Anstoßeinrichtung (90) gegenüber einem mit dem Hauptrotationskörper (1) wirkverbundenen Generator radial an dem Hauptrotationskörper (1) weiter außen angeordnet ist, vorzugsweise umfangsseitig an dem Hauptrotationskörper (1), und vorzugsweise mit dem Generator über ein Getriebe mechanisch verbunden ist oder als Antrieb einen separaten Antriebsmotor aufweist, insbesondere einen elektrischen Antriebsmotor, der vorzugsweise eine Spannungsaufnahme von im Wesentlichen 1 bis 15% der vom Generator erzeugten Spannung aufweist, und die Anstoßeinrichtung den Hauptrotationskörper (1) diskontinuierlich, insbesondere nur bei Stillstand des Hauptrotationskörpers (1), antreibt.

14. Verfahren zum Speichern von Energie mit einem mechanischen Energiespeicher (100, 200, 300, 400, 500, 600, 700, 800, 900, 1000, 1100, 1200) mit einem um eine im Wesentlichen horizontal angeordnete Hauptdrehachse (A1) rotierbar gelagerten, zum Speichern von Rotationsenergie dienenden Hauptrotationskörper (1) und mit mindestens einem an dem Hauptrotationskörper (1) angeordneten, einen Massenmittelpunkt (M21, M22, M23, M24, M25, M26) aufweisenden und unter einer Fliehkrafteinwirkung nach radial außen beschleunigenden Schwungmasseteil (21, 22, 23, 24, 25, 26),
wobei das Schwungmasseteil (21, 22, 23, 24, 25, 26) gegenüber dem Hauptrotationskörper (1) derart verschwenkt wird, dass der auf einer Bahn um die Hauptdrehachse (A1) umlaufende Massenmittelpunkt (M21, M22, M23, M24, M25, M26) bei einer Aufwärtsbewegung des Schwungmasseteil (21, 22, 23, 24, 25, 26) in einem geringeren Abstand zur Hauptdrehachse (A1) angeordnet ist als bei einer Abwärtsbewegung, oder
das Schwungmasseteil (21, 22, 23, 24, 25, 26) gegenüber dem Hauptrotationskörper (1) feststeht und als ein Hohlkörper (31) ausgebildet ist, insbesondere als ein sich über einen vordefinierten Bereich über den Umfang des Hauptrotationskörpers (1) erstreckender Längshohlkörper (32a, 32b), in dem sich ein verlagerbares Medium (10) befindet, wobei das Medium (10) mindestens eine Flüssigkeit umfasst, welche in Abhängigkeit einer Änderung der rotatorischen Umfangsgeschwindigkeit des Hauptrotationskörpers (1) zwischen einem ersten Längsende (54) und einem zweiten Längsende (53) des Hohlkörpers (31, 32a, 32b) hin und her schwappen kann, und das Medium (10) zumindest bei einem rotatorischen Verzögern des Hauptrotationskörpers (1) in Richtung eines in Drehrichtung des Hauptrotationskörpers (1) vorne angeordneten zweiten Längsendes (53) des Hohlkörpers und bei einem rotatorischen Beschleunigen des Hauptrotationskörpers (1) in Richtung eines in Drehrichtung des Hauptrotationskörpers (1) hinten angeordneten zweiten Längsendes (54) des Hohlkörpers strömt, so dass sich über die Länge des Längshohlkörper (32a, 32b) mit Änderung der Umfangsgeschwindigkeit des Hauptrotationskörpers (1) eine Verlagerung des Massenmittelpunkt (M21, M22, M23, M24, M25, M26) über den Umfang des Hauptrotationskörpers (1) ergibt.

15. Verfahren nach Anspruch 14, wobei das gegenüber dem Hauptrotationskörper (1) verschwenkbare Schwungmasseteil (21, 22, 23, 24, 25, 26) als ein mit einem verlagerbaren Medium, insbesondere Flüssigkeit (10) oder Sand (11), befüllter Hohlkörper (31) ausgebildet ist, und das verlagerbare Medium zwischen einem ersten, der Hauptdrehachse (A1) zugewandten Bereich (51) und einem zweiten, der Hauptdrehachse (A1) abgewandten Bereich (52) verlagert werden kann, wobei die Verlagerung des Mediums ausschließlich mittels einer Verschwenkung oder durch eine Formgebung des Schwungmasseteils (21, 22, 23, 24, 25, 26) erfolgt,
oder das gegenüber dem Hauptrotationskörper (1) feststehende Schwungmasseteil (21, 22, 23, 24, 25, 26), insbesondere der Längshohlkörper (32a, 32b), an einer dem Hauptrotationskörpers (1) zugewandten Seite eine in das Innere des Hohlraums des Längshohlkörpers hineinragende Erhöhung (33) aufweist, so dass das darin befindliche Medium (10) bei einer Verlagerung von dem zweiten Längsende (54) zu dem ersten Längsende (53) des Längshohlkörpers (32a, 32b) durch die Erhöhung (33) in Bezug auf den Hauptrotationskörper (1) nach radial außen verlagert wird, und über die Erhöhung (33) hinüber schwappt, und damit eine Verlagerung des Massenmittelpunkt (M21, M22, M23, M24, M25, M26) erfolgt, nämlich sowohl in Richtung radial außen des Hauptrotationskörpers (1) als auch umfangsseitig in Richtung der Drehrichtung des Hauptrotationskörpers (1).
